# EUROPÄISCHE PATENTSCHRIFT

(11) **EP 3 236 194 B1**
(45) Veröffentlichungstag und Bekanntmachung des Hinweises auf die Patenterteilung: **31.10.2018**
(21) Anmeldenummer: 16165722.6
(22) Anmeldetag: 18.04.2016
(51) Int. Cl.: G01B 5/012, G01B 7/012, G01B 3/00

(54) **KOORDINATENMESSGERÄT MIT EINEM MESSENDEN TASTKOPF SOWIE VERFAHREN ZUR MESSUNG EINES WERKSTÜCKES MIT EINEM KOORDINATENMESSGERÄT**
COORDINATE MEASURING MACHINE WITH AN ANALOGUE TOUCH PROBE, AND METHOD FOR MEASURING A WORKPIECE BY MEANS OF A COORDINATE MEASURING MACHINE
MACHINE A MESURER TRIDIMENSIONNELLE COMPRENANT UNE TETE DE PALPAGE ANALOGIQUE ET PROCEDE DE MESURE D'UNE PIECE A L'AIDE D'UNE MACHINE A MESURER TRIDIMENSIONNELLE

(43) Veröffentlichungstag der Anmeldung: 25.10.2017
(73) Patentinhaber: Hexagon Metrology GmbH, 35578 Wetzlar (DE)
(72) Erfinder: Fall, Stefan, 35578 Wetzlar (DE)
(74) Vertreter: Knefel, Cordula

(56) Entgegenhaltungen:
- EP-A1- 0 304 881
- EP-A2- 0 301 390
- EP-B1- 0 344 289
- DE-A1- 4 424 225
- DE-A1- 19 731 005
- US-A1- 2005 126 027

## Beschreibung

Die Erfindung betrifft ein Koordinatenmessgerät mit einem messenden Tastkopf sowie ein Verfahren zur Messung eines Werkstückes mit einem Koordinatenmessgerät.

Aus der Praxis ist bekannt, dass ein Koordinatenmessgerät zum Messen als wesentliches Element einen Tastkopf verwendet, über den mit Hilfe von Tastern an Werkstückoberflächen angetastet wird. Beim Antastvorgang erfolgt durch eine Krafteinwirkung die Auslenkung eines an dem Tastkopf angeordneten Taststiftes.

Aus dem Stand der Technik (EP 1 672 310 A1) sind Tastköpfe vom messenden Typ bekannt. Sie bestehen aus einem festen Teil, das mit einer Einrichtung verbunden ist, die den Tastkopf in drei Raumrichtungen innerhalb eines definierten Messvolumens frei bewegen und positionieren kann, üblicherweise ein sogenanntes Koordinatenmessgerät, sowie aus drei gegenüber dem festen Teil beweglich angeordneten Teilen. Die beweglichen Teile sind häufig als Schaukeln mit Parallelfederblechführungen ausgebildet, die eine exakte Führung in jeweils einer Raumrichtung ermöglicht, wobei diese Bewegungsrichtungen üblicherweise orthogonal zueinander angeordnet sind und alle anderen Freiheitsgrade festgelegt sind. Die Bewegungsrichtungen der drei Schaukeln bauen kinematisch so aufeinander auf, dass die letzte Schaukel der kinematischen Kette innerhalb eines Bewegungsspielraumes in Form eines Würfels von typisch einigen Millimetern Kantenlänge frei beweglich ist. Weiter sind Rückstellelemente vorgesehen, die die Tastkopfschaukeln in eine Stellung bringen, die etwa in der Mitte des Bewegungsspielraumes liegt, wenn keine äußeren Kräfte auf die Schaukel wirken. Weiter sind Positionsmesseinrichtungen vorgesehen, die die Abweichung von der Ruhelage der einzelnen Schaukeln messen und damit einen Auslenkvektor der kinematisch letzten Schaukel definieren. Die Nullpunkte dieser Positionmesseinrichtungen definieren üblicherweise die genannte Ruhelage.

An der letzten Schaukel ist üblicherweise eine mechanische Schnittstelle vorgesehen, die ein automatisches Wechseln von sogenannten Tasterkombinationen ermöglicht. Diese Schnittstelle besteht aus einer kinematisch definierten Lagerung, die genau alle sechs kinematischen Freiheitsgrade festlegt, damit beim wiederholten Einwechseln derselben Tasterkombination die Relativlage zwischen der Tastkopfschaukel und dieser Tasterkombination möglichst exakt reproduziert wird.

Neben diesen messenden Tastköpfen ist eine zweite Kategorie von Tastköpfen bekannt, nämlich die schaltenden Tastköpfe.

Die sogenannten schaltenden Tastköpfe sind solche, die bei der Antastung an einem Messobjekt einen Tripperimpuls bei Erreichen eines Schwellwertes auslösen, der die in diesem Augenblick geltenden Koordinatenwerte festhält. Ein solcher Tastkopf ist beispielsweise aus der DE-PS 27 12 181 bekannt. Er weist ein Lager auf, das die Nullposition des Taststifts hochgenau festlegt und in das der Taststift nach jeder Auslenkung zwangsweise wieder hineinbewegt wird. Zur Erfassung des Triggerimpulses im Augenblick der Antastung des Messobjektes ist ein hochempfindlicher Sensor, beispielsweise ein piezoelektrisches Element, mit dem Taststift verbunden.

Beim Antastvorgang wird der Tastkopf mittels des Koordinatenmessgerätes so lange auf das zu vermessende Werkstück hinbewegt, bis der Taststift das Werkstück berührt, wobei der Sensor den Triggerimpuls auslöst. Dieser friert die Koordinatenwerte im Augenblick der Antastung ein. Der Tastkopf bewegt sich zunächst weiter, wobei der Taststift aus seiner Nullposition ausgelenkt wird. Diese Auslenkung löst über elektrische oder optische Mittel einen Impuls aus, der den Triggerimpuls verifiziert, das heißt, die von diesem festgehaltenen Koordinatenwerte zum Rechner gibt und der zugleich den Abbremsvorgang des Koordinatenmessgerätes auslöst. Dabei kommt der Tastkopf zum Stehen. Die Bewegung des Messgerätes kehrt sich um und bewegt den Tastkopf so lange zurück, bis der Taststift in die Nullposition einrastet. Das Messgerät ist dann für den nächsten Antastvorgang bereit.

Bei den messenden Tastköpfen ist beispielsweise eine torsionssteife Aneinanderreihung von spiel- und reibungsfreien Geradführungssystemen vorgesehen, die miteinander ein räumliches Koordinatensystem bilden und den Taststift tragen. In die Geradführungssysteme, die vorzugsweise als Federparallelogramme ausgebildet sind, sind richtungs- und lageempfindliche Signalgeber eingebaut, die bei einer Auslenkung des Taststifts aus einer Nullposition Signale liefern. Diese Signalgeber sind in einem Lageregelkreis so integriert, dass vom Zeitpunkt des Erstkontaktes zwischen Tasterspitze und Messobjekt an sowohl die Bewegungssteuerung des Koordinatenmessgerätes als auch beim Erreichen eines tasterinternen definierten Schaltpunktes die Messwertübernahme initiiert wird.

Ein solcher messender Tastkopf ist zum Beispiel aus der DE-PS 22 42 355 bekannt. Der Lageregelkreis kann so ausgebildet sein, dass der Tastkopf nach jedem Antastvorgang gesteuert in seine Nullposition oder in eine Ausgangsposition zurückgeführt wird, in der eine voreingestellte Messkraft erreicht wird. Außerdem sind zu diesem Zeitpunkt die beim Antaststoßvorgang erregten Schwingungen abgeklungen.

Es ist auch möglich, den Lageregelkreis so auszubilden, dass auf eine Nullpositionsrückführung verzichtet wird und die Lagesignale im Rechner mit den Koordinatensignalen des Koordinatenmessgerätes verknüpft werden. Dies ermöglicht das kontinuierliche Abtasten eines Messobjekts längs einer vorgegeben Linie, das heißt, das sogenannte Scannen. Dabei werden die tatsächlichen Koordinaten des Messobjekts in jedem Punkt rechnerisch ermittelt.

Zum Stand der Technik (DE 37 25 205 A1) gehört ein Tastkopf für Koordinatenmessgeräte, der gleichzeitig für unterschiedliche Messaufgaben Verwendung findet, das heißt, der sowohl den messenden als auch den schaltenden Betrieb zulässt. Gemäß diesem Stand der Technik ist ein einziger Tastkopf vorgesehen, der für jede der drei Koordinatenrichtungen ein Wegmeßsystem aufweist, das Signale erzeugt, die der Auslenkung in der jeweiligen Koordinatenrichtung proportional sind und bei dem mit jedem Wegmeßsystem ein Nullindikator zur Erkennung der Nulllage des Systems verbunden ist, bei dem darüber hinaus ein Sensor vorgesehen ist, der bei Berührung zwischen Messobjekt und Taststift einen Triggerimpuls erzeugt und bei dem ein System zur Umschaltung des Tastkopfes zwischen schaltender und messender Betriebsart vorgesehen ist.

Bei diesem zum Stand der Technik gehörenden Tastkopf wird ein Schaltsignal erzeugt. Dieses Schaltsignal wird beispielsweise von einer Fotodiode ausgelöst. In diesem Fall erfolgt ein Triggerimpuls, der noch einmal überprüft wird, das heißt, der Triggerimpuls muss in einem zeitlichen Abstand zu dem schaltenden Signal liegen, um verifiziert zu werden. In diesem Fall wird der Tastkopf als schaltender Tastkopf benutzt. Wird weiter verfahren und gemessen, wird der Tastkopf als messender Tastkopf verwendet.

Dieser zum Stand der Technik gehörende Messkopf weist den Nachteil auf, dass bei diesem Tastkopf zusätzliche Kosten für die Programmierung der Messprogramme entstehen und dass ein einziger Messkopf die schaltende und die tastende Messung durchführen muss, was einer erhöhten Fehleranfälligkeit unterliegt.

Weiterhin gehört zum Stand der Technik (US 2005/0126027 A1) ein Koordinatenmessgerät mit einem modular an einem messenden Tastkopf angeordneten schaltenden Tastkopf. Dieser zum Stand der Technik gehörende Tastkopf weist den Nachteil auf, dass die Gesamtfederkonstante nicht einstellbar ist. Damit kann die Klemmkraft bei diesem zum Stand der Technik gehörenden Tastkopf nicht variiert werden.

Das der Erfindung zugrunde liegende technische Problem besteht darin, ein Koordinatenmessgerät anzugeben, mit dem in den beiden Betriebsmodi schaltender und messender Tastkopf gearbeitet werden kann, welches darüber hinaus sehr zuverlässig arbeitet und hinsichtlich der Programmierung einfach ist. Darüber hinaus soll ein Verfahren zur Messung eines Werkstückes mit einem Koordinatenmessgerät angegeben werden, welches ebenfalls einfach und zuverlässig ist.

Dieses technische Problem wird durch ein Koordinatenmessgerät mit den Merkmalen gemäß Anspruch 1 sowie durch ein Verfahren mit den Merkmalen gemäß Anspruch 8 gelöst.

Das erfindungsgemäße Koordinatenmessgerät mit einem messenden Tastkopf, bei dem zusätzlich zu dem messenden Tastkopf ein schaltender Tastkopf vorgesehen ist, bei dem der schaltende Tastkopf lösbar und einwechselbar an dem messenden Tastkopf angeordnet ist und bei dem der messende Tastkopf in mindestens zwei Betriebszuständen mit unterschiedlichen Federkonstanten betreibbar ausgebildet ist, und bei dem in einem ersten Betriebszustand eine Gesamtfederkonstante des messenden Tastkopfes wenigstens das Fünffache einer Gesamtfederkonstanten des schaltenden Tastkopfes beträgt, und bei dem in einem zweiten Betriebszustand eine Gesamtfederkonstante des schaltenden Tastkopfes wenigstens das Fünffache der Gesamtfederkonstanten des messenden Tastkopfes beträgt, zeichnet sich dadurch aus, dass die Gesamtfederkonstante des schaltenden Tastkopfes und die Gesamtfederkonstante des messenden Tastkopfes variabel einstellbar sind.

Das erfindungsgemäße Verfahren zur Messung eines Werkstückes mit einem Koordinatenmessgerät, welches einen messenden Tastkopf aufweist, bei dem an dem messenden Tastkopf ein schaltender Tastkopf angeordnet wird, bei dem an dem schaltenden Tastkopf ein Taststift angeordnet wird, und bei dem einer der folgenden Betriebsmodi eingestellt wird:
a) eine Gesamtfederkonstante des messenden Tastkopfes beträgt wenigstens das Fünffache einer Gesamtfederkonstanten des schaltenden Tastkopfes oder
b) eine Gesamtfederkonstante des schaltenden Tastkopfes beträgt wenigstens das Fünffache der Gesamtfederkonstanten des messenden Tastkopfes,
zeichnet sich dadurch aus, dass die Gesamtfederkonstante des schaltenden Tastkopfes und die Gesamtfederkonstante des messenden Tastkopfes variabel einstellbar sind.

Das erfindungsgemäße Koordinatenmessgerät und das erfindungsgemäße Verfahren lösen mehrere Probleme dadurch, dass sie eine Sensoreinheit wahlweise in einen schaltenden oder messenden Messbetrieb umschaltet, ohne den Tastkopf zu wechseln. Die Erfindung löst weiterhin das Problem, dass die sich aus dem bisherigen Funktionsprinzip ergebende begrenzte Länge des Tasters im schaltenden Tastkopf weniger problematisch ist. Durch das erfindungsgemäße Koordinatenmessgerät und das erfindungsgemäße Verfahren können zusätzlich Signalleitungen vom Tastkopf eingespart werden, die einen negativen Einfluss auf den Tastkopf, beispielsweise mechanische Kraftwirkung durch die Signalleitungen oder ein Übersprechen von Signalen haben könnten.

Das erfindungsgemäße Koordinatenmessgerät weist den Vorteil auf, dass an dem messenden Tastkopf ein schaltender Tastkopf lösbar und einwechselbar angeordnet ist. Der messende und der schaltende Tastkopf können derart eingestellt werden, dass entweder der Betriebsmodus "schaltender Tastkopf" oder der Betriebsmodus "messender Tastkopf" für die Messung verwendet wird. Dies geschieht dadurch, dass eine Gesamtfederkonstante des messenden Tastkopfes wenigstens das Fünffache einer Gesamtfederkonstanten des schaltenden Tastkopfes beträgt, das heißt, dass der messende Tastkopf quasi einen geklemmten Zustand aufweist und der schaltende Tastkopf als Taster wirkt. Hierdurch erhält man den sogenannten schaltenden Messbetrieb.

Es besteht auch die Möglichkeit, dass die Gesamtfederkonstante des schaltenden Tastkopfes wenigstens das Fünffache der Gesamtfederkonstanten des messenden Tastkopfes beträgt. Dies ist der sogenannte "messende Messbetrieb". Der Tastkopf wird als messender Tastkopf betrieben und der schaltende Tastkopf wirkt als Taster.

Grundsätzlich besteht natürlich auch die Möglichkeit, an dem messenden Tastkopf, wie aus dem Stand der Technik bekannt, einen Taster oder eine Taststiftkombination anzuordnen und das Koordinatenmessgerät gemäß dem Stand der Technik mit einem messenden Tastkopf zu betreiben.

Gemäß der Erfindung ist die Gesamtfederkonstante des schaltenden Tastkopfes und die Gesamtfederkonstante des messenden Tastkopfes einstellbar.

Das bedeutet, dass die Betriebsmodi "schaltender" oder "messender" Tastkopf einstellbar sind. Ist die Gesamtfederkonstante des schaltenden Tastkopfes groß gegenüber der Gesamtfederkonstante des messenden Tastkopfes, wird der sogenannte messende Betriebsmodus einschaltet. Die beiden Tastköpfe, das heißt der schaltende Tastkopf und der messende Tastkopf werden als Sensoreinheit im messenden Messbetrieb betrieben.

Ist die Gesamtfederkonstante des messenden Tastkopfes groß gegenüber der Gesamtfederkonstante des schaltenden Tastkopfes, dann erfolgt ein Betrieb im schaltenden Messbetrieb. Die Sensoreinheit, bestehend aus schaltendem Tastkopf und messendem Tastkopf wird als schaltender Tastkopf betrieben mit einem geklemmten messenden Tastkopf.

Üblicherweise ist die Gesamtfederkonstante des messenden Tastkopfes aus einer Summe der einzelnen Federkonstanten der in dem messenden Tastkopf angeordneten federnden Elemente gebildet. Die Gesamtfederkonstante des schaltenden Tastkopfes ist üblicherweise aus einer Summe der einzelnen Federkonstanten der in dem schaltenden Tastkopf angeordneten federnden Elemente gebildet.

Der schaltende und der messende Tastkopf bestehen jeweils beispielsweise aus Geradführungssystemen, die miteinander ein räumliches Koordinatensystem bilden und den Taststift tragen. Die Geradführungssysteme bestehen vorzugsweise aus Federparallelogrammen. Diese Federparallelogramme weisen jeweils eine Federkonstante auf. Die Gesamtfederkonstante setzt sich aus der Summe der einzelnen Federkonstanten in den jeweiligen Raumrichtungen zusammen.

Die Federn in dem messenden Tastkopf oder die Federn in dem schaltenden Tastkopf sind vorteilhaft jeweils als ein System unabhängiger Federn für die verschiedenen Raumrichtungen ausgebildet. Hierdurch erhält man ein räumliches Koordinatensystem.

Gemäß einer vorteilhaften Ausführungsform der Erfindung ist an dem schaltenden Tastkopf ein Taststift oder eine Taststiftkombination anordbar. Mit diesem Taststift oder der Taststiftkombination wird ein zu vermessendes Werkstück angetastet.

Gemäß einer besonders bevorzugten Ausführungsform der Erfindung ist zwischen dem messenden Tastkopf und dem schaltenden Tastkopf eine mechanische Schnittstelle vorgesehen für eine reproduzierbare Lagerung des schaltenden Tastkopfes an dem messenden Tastkopf.

Bevorzugt sind an dem messenden Tastkopf drei Lager vorgesehen und an dem schaltenden Tastkopf drei Gegenlager oder umgekehrt und die Lager und Gegenlager weisen insgesamt sechs Auflagepunkte auf.

Durch die Ausbildung der Lager mit sechs Auflagepunkten werden die sechs möglichen Freiheitsgrade abgedeckt. Die Lager können aus je zwei zylinderförmigen Rollen gebildet sein und die Gegenlager bestehen aus jeweils einer Kugel, so dass die sechs Auflagepunkte gewährleistet sind.

Es ist auch möglich, die Lager derart auszubilden, dass die Gegenlager, die beispielsweise als Kugeln ausgebildet sind, jeweils in einem als Planlager, in einem als V-Lager und in einem als Triple-Lager ausgebildeten Lager angeordnet sind, so dass wiederum sechs Auflagepunkte vorhanden sind.

Gemäß einer weiteren vorteilhaften Ausführungsform der Erfindung sind in dem schaltenden Tastkopf zur Erfassung einer Auslenkung wenigstens ein piezoelektrisches Element wenigstens eine Fotodiode und/oder wenigstens ein elektrischer Kontakt vorgesehen. Über diese Sensoren wird, wenn der Taststift das Werkstück berührt, ein Schaltsignal ausgelöst und die Antastung wird erfasst.

Das erfindungsgemäße Verfahren weist den Vorteil auf, dass die Sensoreinheit, bestehend aus schaltendem Tastkopf und messendem Tastkopf in den zwei Betriebsmodi a) schaltender Messbetrieb, b) messender Messbetrieb betrieben werden kann.

Hierzu wird eine Gesamtfederkonstante des messenden Tastkopfes im geklemmten Zustand derart eingestellt, dass die Gesamtfederkonstante wenigstens das Fünffache einer Gesamtfederkonstanten des schaltenden Tastkopfes beträgt (schaltender Messbetrieb). Im anderen Fall, das heißt im messenden Messbetrieb wird die Gesamtfederkonstante des schaltenden Tastkopfes derart eingestellt, dass sie wenigstens das Fünffache der Gesamtfederkonstanten des messenden Tastkopfes beträgt.

Die Gesamtfederkonstanten können variabel eingestellt werden. Ist die Gesamtfederkonstante sehr groß eingestellt, das heißt sie geht im Idealfall gegen unendlich, erhält man die Federkonstante für die Klemmung des Tastkopfes.

Die Betriebsmodi sind vorteilhaft vor und/oder während der Messung einstellbar und/oder umstellbar.

Die beiden Betriebsmodi "messender Betriebsmodus" und "schaltender Betriebsmodus" werden vorteilhaft vor der Messung eingestellt. Wird die Messaufgabe gewechselt oder wird es während des Messvorganges erforderlich, ist es auch möglich, den Betriebsmodus während der Messung umzuschalten.

Gemäß einer vorteilhaften Ausführungsform der Erfindung kann die Kombination des messenden und des schaltenden Tastkopfes als eine Sensoreinheit in einem schaltenden oder einem messenden Betriebsmodus betrieben werden. Hierzu wird wie schon ausgeführt, die Gesamtfederkonstante des messenden Tastkopfes derart eingestellt, dass sie wenigstens das Fünffache einer Gesamtfederkonstanten des schaltenden Tastkopfes beträgt, oder die Gesamtfederkonstante des schaltenden Tastkopfes beträgt wenigstens das Fünffache der Gesamtfederkonstanten des messenden Tastkopfes.

Im Idealfall ist der messende Tastkopf oder der schaltende Tastkopf geklemmt. Klemmung bedeutet, dass die Geradführungssysteme blockiert werden, so dass eine Auslenkung dieser Führungssysteme entweder im messenden Tastkopf oder in dem schaltenden Tastkopf nicht mehr möglich ist.

Gemäß einer vorteilhaften Ausführungsform der Erfindung wird die Umschaltung auf die höhere Federkonstante mit wenigstens einem Stellglied durchgeführt. Durch dieses Stellglied ist es möglich, die Geradführungssysteme in ihrer Auslenkung zu beschränken oder im Extremfall eine Auslenkung der Geradführungssysteme zu verhindern.

Gemäß einer weiteren Ausführungsform der Erfindung erfolgt die Umschaltung auf die höhere Federkonstante durch Blockierung von Federblechen. Sind Federparallelogramme in dem messenden Tastkopf oder in dem schaltenden Tastkopf vorgesehen, können diese hinsichtlich ihrer Auslenkung blockiert werden. Hierdurch erfolgt die Umstellung auf die höhere Federkonstante.

Weitere Merkmale und Vorteile der Erfindung ergeben sich anhand der zugehörigen Zeichnung, in der mehrere Ausführungsbeispiele eines erfindungsgemäßen Koordinatenmessgerätes nur beispielhaft dargestellt sind. In der Zeichnung zeigen:
- Fig. 1: Ein Koordinatenmessgerät in perspektivischer Ansicht;
- Fig. 2: ein zum Stand der Technik gehörender Tastkopf;
- Fig. 3: eine erfindungsgemäße Sensoreinheit (schematisch);
- Fig. 4: ein Ablaufdiagramm;
- Fig. 5: eine Schnittstelle mit Gegenlagern in Draufsicht;
- Fig. 6: eine Schnittstelle mit Lagern in Draufsicht;
- Fig. 7: ein geändertes Ausführungsbeispiel einer Schnittstelle mit Gegenlagern in Draufsicht;
- Fig. 8: zwei Tastkopfschaukeln in perspektivischer Ansicht.

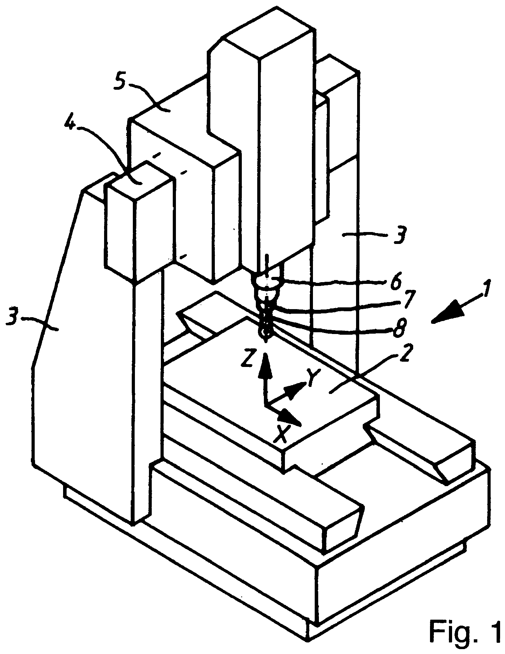

Fig. 1 zeigt ein Koordinatenmessgerät 1 mit einem in X-Richtung verschiebbaren Messtisch 2. Ein Portal 3, welches nicht verschiebbar ausgebildet ist, trägt an einer Traverse 4 einen in Y-Richtung verschiebbaren Schlitten 5, an dem wiederum eine in Z-Richtung verschiebbare Pinole 6 angeordnet ist. An der Pinole 4 ist ein Tastkopf 7 angeordnet, an dem wiederum ein Taststift 8 angeordnet ist.

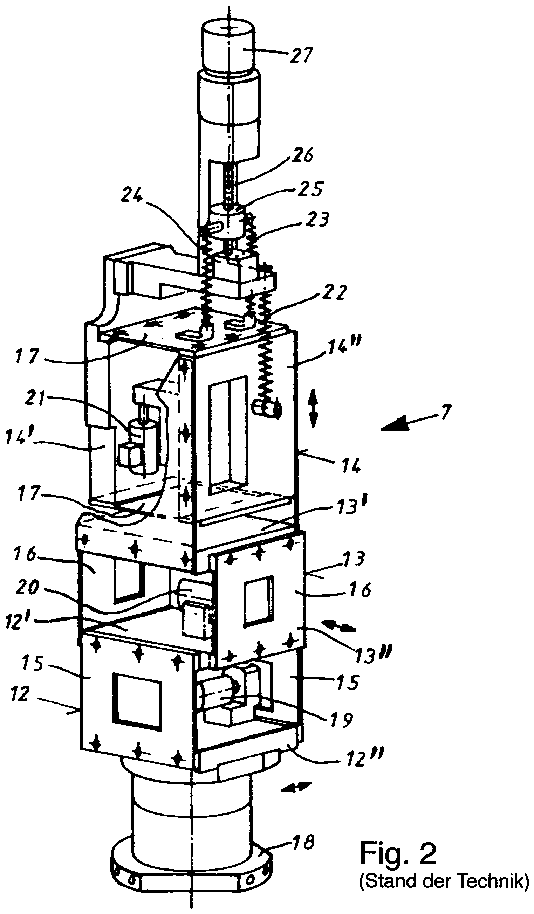

Fig. 2 zeigt einen messenden Tastkopf 7, wie er gemäß dem Stand der Technik bekannt ist. Der Tastkopf 7 weist drei Tastkopfschaukeln 12, 13, 14 auf. Die Tastkopfschaukein 12, 13, 14 erlauben eine Auslenkung des Tastkopfes 7 in X-, Y- und Z-Richtung. Hierzu weisen die Tastkopfschaukeln jeweils einen ortsfesten Teil 12', 13', 14' und einen relativ dazu beweglichen Teil 12", 13", 14" auf. Die ortsfesten Teile 12', 13', 14' und die beweglichen Teile 12", 13", 14" sind über Federbleche 15, 16, 17 jeweils relativ zueinander verschiebbar miteinander verbunden.

An einer Tasteraufnahme 18 wird ein Taststift (nicht dargestellt) befestigt. Jede Tastkopfschaukel weist jeweils ein Wegmeßsystem 19, 20, 21 auf. Der Tastkopf 7 weist Gewichtsausgleichsfedern 22, 23, 24 auf, die mit einer Spindelmutter 25 verbunden sind. Eine Spindel 26 wird zum Bewegen der Spindelmutter von einem Motor 27 angetrieben.

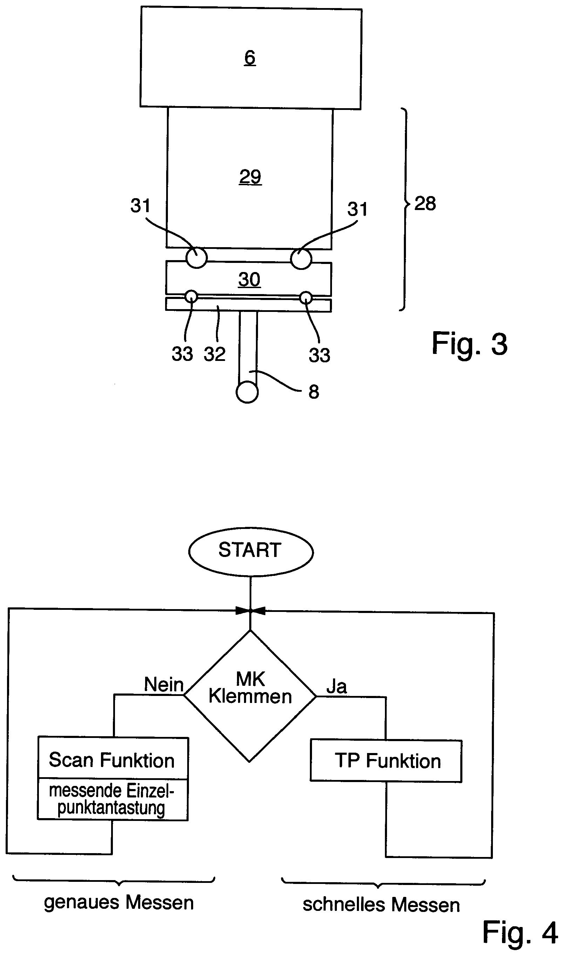

Fig. 3 zeigt eine Sensoreinheit 28, die aus einem messenden Tastkopf 29 und einem schaltenden Tastkopf 30 gebildet wird. An dem schaltenden Tastkopf 30 ist der Taststift 8 angeordnet. Der messende Tastkopf 29 ist an der Pinole 6 angeordnet. Die Verbindung zwischen dem messenden Tastkopf 29 und der Pinole 6 ist als feste Verbindung ausgestaltet, das heißt, der messende Tastkopf 29 wird üblicherweise nicht eingewechselt. Es besteht jedoch auch die Möglichkeit, den messenden Tastkopf 29 als einwechselbaren Tastkopf zu gestalten.

Der schaltende Tastkopf 30 ist lösbar an dem messenden Tastkopf 29 angeordnet. Hierzu ist eine sogenannte Dreipunktlagerung mit in Fig. 3 lediglich schematisch dargestellten Lagern 31 vorgesehen. Die Dreipunktlagerung wird noch genauer beschrieben.

Der Taststift 8 ist mit einer Platte 32 ebenfalls lösbar an dem schaltenden Tastkopf 30 angeordnet. Hierfür sind ebenfalls schematisch dargestellte Lager 33 vorgesehen, die ebenfalls noch genauer beschrieben werden.

Die in Fig. 3 dargestellte Sensoreinheit 28 kann in den zwei folgenden Betriebsmodi betrieben werden:
Erstens ist der Betrieb als messender Tastkopf möglich. Die Federkonstante des schaltenden Tastkopfes kann groß sein gegenüber der Federkonstanten des messenden Tastkopfes. Ist die Gesamtfederkonstante des schaltenden Tastkopfes wenigstens fünfmal so groß wie die Gesamtfederkonstante des messenden Tastkopfes, so ist der schaltende Tastkopf als starres Tastsystem mit Biegeeigenschaften zu betrachten. In diesem Fall wird die Sensoreinheit 28 in einem sogenannten messenden Betrieb betrieben.

Zweitens kann der messende Tastkopf auch geklemmt werden. In diesem Fall ist die Gesamtfederkonstante des messenden Tastkopfes wenigstens fünfmal so groß wie die Gesamtfederkonstante des schaltenden Tastkopfes und der messende Tastkopf kann als starres System behandelt werden. In diesem Fall wird die Sensoreinheit 28 im schaltenden Betrieb betrieben.

Gemäß Fig. 4 sind die zwei Betriebsmodi noch einmal dargestellt.

Vor der Messung oder auch während der Messung wird geprüft, ob der messende Tastkopf 29 geklemmt wird oder dessen Gesamtfederkonstante derart eingestellt wird, dass die Gesamtfederkonstante des messenden Tastkopfes wenigstens das Fünffache der Gesamtfederkonstanten des schaltenden Tastkopfes beträgt. Liegt dieser Fall vor, wird die Sensoreinheit 28 im schaltenden Betrieb betrieben. In diesem Fall ist ein schnelles Messen im schaltenden Messbetrieb möglich.

Ist dies nicht der Fall, das heißt, wird der messende Tastkopf 28 nicht geklemmt oder die Gesamtfederkonstante des messenden Tastkopfes ist wenigstens fünfmal kleiner als die Gesamtfederkonstante des schaltenden Tastkopfes, wird die Sensoreinheit 28 mit der sogenannten Scanfunktion betrieben, das heißt es wird eine messende Einzelpunktantastung durchgeführt. Hierdurch erhält man eine genauere Messung.

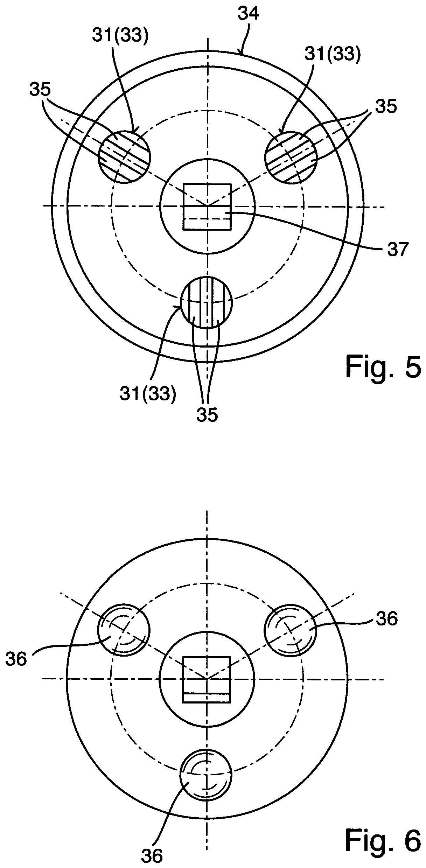

Fig. 5 zeigt eine Schnittstelle 34 zwischen dem messenden Tastkopf 29 und dem schaltenden Tastkopf 30. Diese Schnittstelle kann gleichermaßen zwischen dem schaltenden Tastkopf 30 und dem Taststift 8 eingesetzt werden. In dem messenden Tastkopf 29 und gleichermaßen in dem schaltenden Tastkopf 30 sind drei Lager 31 oder 33 angeordnet. Die drei Lager 31, 33 weisen Zylinder 35 auf. An den Zylindern 35 kommen Kugeln 36, die in Fig. 6 dargestellt sind, zur Anlage. Die Kugeln 36 sind für die Schnittstelle zwischen dem messenden Tastkopf 29 und dem schaltenden Tastkopf 30 an dem schaltenden Tastkopf 30 angeordnet. Für die Schnittstelle zwischen dem schaltenden Tastkopf 30 und dem Taststift 8 sind die Kugeln an der Taststiftplatte 32 angeordnet. In Fig. 5 ist eine Aufnahme 37 vorgesehen, beispielsweise für eine nicht dargestellte hakenförmige Haltevorrichtung.

Durch die Auflage der Kugeln 36, die in Fig. 6 dargestellt sind, an den Zylindern 35, die in Fig. 5 dargestellt sind, werden sechs definierte Anlagepunkte gebildet, um eine reproduzierbare hochgenaue Lagerung zu gewährleisten.

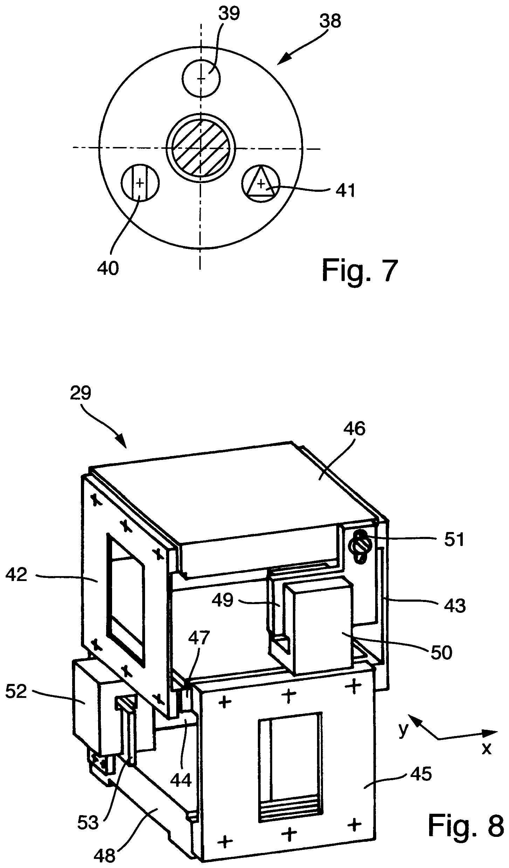

Die sechs Anlagepunkte können auch mit der in Fig. 7 dargestellten Schnittstelle 38 erzielt werden.

Die Schnittstelle 38 weist ein Planlager 39, ein V-Lager 40 und ein Triple-Lager 41 auf. Kommen die Kugeln 36, wie in Fig. 6 dargestellt, in Anlage mit dem Planlager 39, V-Lager 40 und Triple-Lager 41, sind wiederum sechs Anlagepunkte vorhanden und eine reproduzierbare hochgenaue Lagerung ist gewährleistet.

Fig. 8 zeigt zwei Tastkopfschaukeln, mit denen das Prinzip der Einstellbarkeit der Gesamtfederkonstanten des schaltenden Tastkopfes 30 oder des messenden Tastkopfes 29 dargestellt werden soll. Beispielhaft sind zwei Tastkopfschaukeln des Tastkopfes 29 dargestellt. Der Tastkopf 29 weist Parallelogramm-Federbleche 42, 43, 44, 45 auf. Eine Platte 46 ist über die Parallelogramm-Federbleche 42, 43 gegenüber einer Platte 47 in X-Richtung auslenkbar. Die Platte 47 ist über die Parallelogramm-Federbleche 44, 45 gegenüber einer Platte 48 auslenkbar gelagert.

An der Platte 46 ist ein Blech 49 fest angeordnet, welches durch ein Magnetfeld eines Magneten 50 geführt ist. Der Magnet 50 ist als Hufeisenmagnet ausgebildet. Durch den Magneten 50 und das Blech 42 erfolgt eine Dämpfung in X-Richtung. Eine Verstellmöglichkeit zur Einstellung der Dämpfung durch Veränderung der Eintauchtiefe ist durch ein Langloch 51 gegeben. Es ist auch möglich, beispielsweise eine Verstellschraube vorzusehen.

Die Platte 47 ist über die Parallelogramm-Federbleche 44, 45 gegenüber der Platte 48 in Y-Richtung auslenkbar gelagert. An dem Teil 47 ist ein Magnet 52 fest angeordnet, in dessen Magnetfeld ein Blech 53 angeordnet ist, welches wiederum fest beziehungsweise einstellbar fest mit der Platte 48 verbunden ist.

Der Magnet 52 und das Blech 53 stellen eine Dämpfungsvorrichtung und/oder Klemmvorrichtung für die Y-Richtung dar. Der dargestellte Teil des Tastkopfes 29 weist für die X- und die Y-Richtung jeweils eine Klemmvorrichtung 49, 50; 52, 53 auf. Für die Z-Richtung ist die Dämpfungsvorrichtung oder Klemmvorrichtung nicht dargestellt. Sie funktioniert jedoch analog.

Sind die Magnete 50, 52 einstellbar, so ist die Klemmkraft und damit die Federkonstante der jeweiligen Tastkopfschaukel einstellbar. Die einzelnen Federkonstanten jeder Tastkopfschaukel stellen eine Gesamtfederkonstante des Tastkopfes 29 dar.

Analog kann die Gesamtfederkonstante des schaltenden Tastkopfes 30 (nicht dargestellt) einstellbar ausgebildet sein.

### Bezugszahlen

- 1: Koordinatenmessgerät
- 2: Messtisch
- 3: Portal
- 4: Traverse
- 5: Schlitten
- 6: Pinole
- 7: Tastkopf
- 8: Taststift
- 12: Tastkopfschaukel
- 13: Tastkopfschaukel
- 14: Tastkopfschaukel
- 12': festes Teil der Tastkopfschaukel
- 13': festes Teil der Tastkopfschaukel
- 14': festes Teil der Tastkopfschaukel
- 12": bewegliches Teil der Tastkopfschaukel
- 13": bewegliches Teil der Tastkopfschaukel
- 14": bewegliches Teil der Tastkopfschaukel
- 15: Federblech
- 16: Federblech
- 17: Federblech
- 18: Tasteraufnahme
- 19: Wegmeßsystem
- 20: Wegmeßsystem
- 21: Wegmeßsystem
- 22: Gewichtsausgleichsfeder
- 23: Gewichtsausgleichsfeder
- 24: Gewichtsausgleichsfeder
- 25: Spindelmutter
- 26: Spindel
- 27: Motor
- 28: Sensoreinheit
- 29: messender Tastkopf
- 30: schaltender Tastkopf
- 31: Lager
- 32: Platte
- 33: Lager
- 34: Sensorschnittstelle
- 35: Zylinder
- 36: Kugel
- 37: Aufnahme
- 38: Schnittstelle
- 39: Planlager
- 40: V-Lager
- 41: Triple-Lager
- 42: Parallelogramm-Federblech
- 43: Parallelogramm-Federblech
- 44: Parallelogramm-Federblech
- 45: Parallelogramm-Federblech
- 46: Platte
- 47: Platte
- 48: Platte
- 49: Blech
- 50: Magnet
- 51: Langloch
- 52: Magnet
- 53: Blech

## Patentansprüche

1. Koordinatenmessgerät mit einem messenden Tastkopf, bei dem zusätzlich zu dem messenden Tastkopf (29) ein schaltender Tastkopf (30) vorgesehen ist, bei dem der schaltende Tastkopf (30) lösbar und einwechselbar an dem messenden Tastkopf (29) angeordnet ist und bei dem der messende Tastkopf in mindestens zwei Betriebszuständen mit unterschiedlichen Federkonstanten betreibbar ausgebildet ist und bei dem in einem ersten Betriebszustand eine Gesamtfederkonstante des messenden Tastkopfes (29) wenigstens das Fünffache einer Gesamtfederkonstanten des schaltenden Tastkopfes (29) beträgt und bei dem in einem zweiten Betriebszustand eine Gesamtfederkonstante des schaltenden Tastkopfes (30) wenigstens das Fünffache der Gesamtfederkonstanten des messenden Tastkopfes (29) beträgt,
**dadurch gekennzeichnet, dass** die Gesamtfederkonstante des schaltenden Tastkopfes (30) und die Gesamtfederkonstante des messenden Tastkopfes (29) variabel einstellbar sind.

2. Koordinatenmessgerät nach Anspruch 1, **dadurch gekennzeichnet, dass** die Gesamtfederkonstante des messenden Tastkopfes (29) aus einer Summe der einzelnen Federkonstanten der in dem messenden Tastkopf (29) angeordneten federnden Elemente (42, 43, 44, 45) gebildet ist.

3. Koordinatenmessgerät nach einem der Ansprüche 1 oder 2, **dadurch gekennzeichnet, dass** die Gesamtfederkonstante des schaltenden Tastkopfes (30) aus einer Summe der einzelnen Federkonstanten der in dem schaltenden Tastkopf (30) angeordneten federnden Elemente (42, 43, 44, 45) gebildet ist.

4. Koordinatenmessgerät nach einem der vorhergehenden Ansprüche, **dadurch gekennzeichnet, dass** die Federn (42, 43, 44, 45) in dem messenden Tastkopf (29) oder die Federn (42, 43, 44, 45) in dem schaltenden Tastkopf (30) jeweils als ein System unabhängiger Federn (42, 43; 44, 45) für die verschiedenen Raumrichtungen (X, Y, Z) ausgebildet sind.

5. Koordinatenmessgerät nach einem der vorhergehenden Ansprüche, **dadurch gekennzeichnet, dass** an dem schaltenden Tastkopf (30) ein Taststift (8) oder eine Taststiftkombination anordbar ist.

6. Koordinatenmessgerät nach einem der vorhergehenden Ansprüche, **dadurch gekennzeichnet, dass** zwischen dem messenden Tastkopf (29) und dem schaltenden Tastkopf (30) eine mechanische Schnittstelle (34) vorgesehen ist für eine reproduzierbare Lagerung des schaltenden Tastkopfes (30) an dem messenden Tastkopf (29).

7. Koordinatenmessgerät nach einem der vorhergehenden Ansprüche, **dadurch gekennzeichnet, dass** an dem messenden Tastkopf (29) drei Lager (31) vorgesehen sind und an dem schaltenden Tastkopf (30) drei Gegenlager (36) oder umgekehrt, und dass die Lager (31) und Gegenlager (36) insgesamt sechs Auflagepunkte aufweisen.

8. Verfahren zur Messung eines Werkstückes mit einem Koordinatenmessgerät, welches einen messenden Tastkopf aufweist, bei dem an dem messenden Tastkopf (29) ein schaltender Tastkopf (30) angeordnet wird, bei dem an dem schaltenden Tastkopf (30) ein Taststift (8) angeordnet wird, und bei dem einer der folgenden Betriebsmodi eingestellt wird:
a) eine Gesamtfederkonstante des messenden Tastkopfes (29) beträgt wenigstens das Fünffache einer Gesamtfederkonstanten des schaltenden Tastkopfes (30) oder
b) eine Gesamtfederkonstante des schaltenden Tastkopfes (30) beträgt wenigstens das Fünffache der Gesamtfederkonstanten des messenden Tastkopfes (29),
**dadurch gekennzeichne**t, dass die Gesamtfederkonstante des schaltenden Tastkopfes (30) und die Gesamtfederkonstante des messenden Tastkopfes (29) variabel einstellbar sind.

9. Verfahren nach Anspruch 8, **dadurch gekennzeichnet, dass** die Betriebsmodi vor und/oder während der Messung einstellbar und/oder umschaltbar sind.

10. Verfahren nach Anspruch 8 oder 9, **dadurch gekennzeichnet, dass** die Kombination des messenden Tastkopfes (29) und des schaltenden Tastkopfes (30) als eine Sensoreinheit (28) in einem schaltenden oder einem messenden Betriebsmodus betrieben wird.

11. Verfahren nach einem der Ansprüche 8 bis 10, **dadurch gekennzeichnet, dass** die Umschaltung auf eine andere Federkonstante mit wenigstens einem Stellglied durchgeführt wird.

12. Verfahren nach Anspruch 11, **dadurch gekennzeichnet, dass** die Umschaltung auf eine andere Federkonstante durch Blockieren von Federblechen (42, 43, 44, 45) erfolgt.

## Claims

1. Coordinate measuring machine with a measuring probe head, in which a switching probe head (30) is provided in addition to the measuring probe head (29), in which the switching probe head (30) is arranged on the measuring probe head (29) in a detachable and interchangeable manner, and in which the measuring probe head is designed such that it can be operated in at least two operating states with different spring constants, and in which, in a first operating state, a total spring constant of the measuring probe head (29) is at least five times a total spring constant of the switching probe head (29), and in which, in a second operating state, a total spring constant of the switching probe head (30) is at least five times the total spring constant of the measuring probe head (29),
**characterized in that** the total spring constant of the switching probe head (30) and the total spring constant of the measuring probe head (29) can be set in a variable manner.

2. Coordinate measuring machine according to claim 1, **characterized in that** the total spring constant of the measuring probe head (29) is formed from a sum of the individual spring constants of the spring elements (42, 43, 44, 45) arranged in the measuring probe head (29).

3. Coordinate measuring machine according to one of claims 1 or 2, **characterized in that** the total spring constant of the switching probe head (30) is formed from a sum of the individual spring constants of the spring elements (42, 43, 44, 45) arranged in the switching probe head (30).

4. Coordinate measuring machine according to one of the preceding claims, **characterized in that** the springs (42, 43, 44, 45) in the measuring probe head (29) or the springs (42, 43, 44, 45) in the switching probe head (30) are each designed as a system of independent springs (42, 43; 44, 45) for the different spatial directions (X, Y, Z).

5. Coordinate measuring machine according to one of the preceding claims, **characterized in that** a stylus (8) or a stylus combination can be arranged on the switching probe head (30).

6. Coordinate measuring machine according to one of the preceding claims, **characterized in that** a mechanical interface (34) is provided between the measuring probe head (29) and the switching probe head (30) for reproducible mounting of the switching probe head (30) on the measuring probe head (29).

7. Coordinate measuring machine according to one of the preceding claims, **characterized in that** three bearings (31) are provided on the measuring probe head (29) and three counter-bearings (36) are provided on the switching probe head (30), or vice versa, and **in that** the bearings (31) and counter-bearings (36) have a total of six bearing points.

8. Method for measuring a workpiece by means of a coordinate measuring machine which has a measuring probe head, in which a switching probe head (30) is arranged on the measuring probe head (29), in which a stylus (8) is arranged on the switching probe head (30), and in which one of the following modes of operation is set:
a) a total spring constant of the measuring probe head (29) is at least five times a total spring constant of the switching probe head (30), or
b) a total spring constant of the switching probe head (30) is at least five times the total spring constant of the measuring probe head (29),
**characterized in that** the total spring constant of the switching probe head (30) and the total spring constant of the measuring probe head (29) can be set in a variable manner.

9. Method according to claim 8, **characterized in that** the modes of operation can be- set and/or switched before and/or during the measurement.

10. Method according to claim 8 or 9, **characterized in that** the combination of the measuring probe head (29) and the switching probe head (30) is operated as one sensor unit (28) in a switching or measuring mode of operation.

11. Method according to one of claims 8 to 10, **characterized in that** the switch to a different spring constant is carried out by means of at least one actuator.

12. Method according to claim 11, **characterized in that** the switch to a different spring constant takes place by blocking spring plates (42, 43, 44, 45).

## Revendications

1. Appareil de mesure de coordonnées comprenant une sonde de mesure, dans lequel une sonde (30) de commutation est prévue en plus de la sonde (29) de mesure, dans lequel la sonde (30) de commutation est agencée de manière amovible et interchangeable sur la sonde (29) de mesure et dans lequel la sonde de mesure est conçue pour fonctionner dans au moins deux états de fonctionnement présentant différentes constantes de rappel et dans lequel, dans un premier état de fonctionnement, une constante de rappel totale de la sonde (29) de mesure atteint au moins le quintuple d'une constante de rappel totale de la sonde (30) de commutation et dans lequel, dans un deuxième état de fonctionnement, une constante de rappel totale de la sonde (30) de commutation atteint au moins le quintuple des constantes de rappel totales de la sonde (29) de mesure,
**caractérisé en ce que** la constante de rappel totale de la sonde (30) de commutation et la constante de rappel totale de la sonde (29) de mesure peuvent être réglées de manière variable.

2. Appareil de mesure de coordonnées selon la revendication 1, **caractérisé en ce que** la constante de rappel totale de la sonde (29) de mesure est formée d'une somme des différentes constantes de rappel des éléments élastiques (42, 43, 44, 45) agencés dans la sonde (29) de mesure.

3. Appareil de mesure de coordonnées selon l'une quelconque des revendications 1 ou 2, **caractérisé en ce que** la constante de rappel totale de la sonde (30) de commutation est formée d'une somme des différentes constantes de rappel des éléments élastiques (42, 43, 44, 45) agencés dans la sonde (30) de commutation.

4. Appareil de mesure de coordonnées selon l'une quelconque des revendications précédentes, **caractérisé en ce que** les éléments élastiques (42, 43, 44, 45) dans la sonde (29) de mesure ou les éléments élastiques (42, 43, 44, 45) dans la sonde (30) de commutation sont réalisés respectivement sous la forme d'un système d'éléments élastiques (42, 43 ; 44, 45) indépendants pour les différentes directions spatiales (X, Y, Z).

5. Appareil de mesure de coordonnées selon l'une quelconque des revendications précédentes, **caractérisé en ce qu'**un palpeur (8) ou une combinaison de palpeurs peuvent être agencé(s) sur la sonde (30) de commutation.

6. Appareil de mesure de coordonnées selon l'une quelconque des revendications précédentes, **caractérisé en ce qu'**une interface mécanique (34) est prévue entre la sonde (29) de mesure et la sonde (30) de commutation pour un montage reproductible de la sonde (30) de commutation sur la sonde (29) de mesure.

7. Appareil de mesure de coordonnées selon l'une quelconque des revendications précédentes, **caractérisé en ce que** trois rotules (31) sont prévues sur la sonde (29) de mesure et trois paliers complémentaires (36) sont prévus sur la sonde (30) de commutation, ou inversement, et **en ce que** les paliers (31) et les paliers complémentaires (36) présentent dans l'ensemble six points d'appui.

8. Procédé pour la mesure d'une pièce au moyen d'un appareil de mesure de coordonnées, lequel présente une sonde de mesure, dans lequel une sonde (30) de commutation est agencée sur la sonde (29) de mesure, dans lequel un palpeur (8) est agencé sur la sonde (30) de commutation, et dans lequel un des modes de fonctionnement suivants est réglé :
a) une constante de rappel totale de la sonde (29) de mesure atteint au moins le quintuple d'une constante de rappel totale de la sonde (30) de commutation ou
b) une constante de rappel totale de la sonde (30) de commutation atteint au moins le quintuple des constantes de rappel totales de la sonde (29) de mesure,
**caractérisé en ce que** la constante de rappel totale de la sonde (30) de commutation et la constante de rappel totale de la sonde (29) de mesure peuvent être réglées de manière variable.

9. Procédé selon la revendication 8, **caractérisé en ce que** les modes de fonctionnement peuvent être réglés et/ou basculés avant et/ou pendant la mesure.

10. Procédé selon la revendication 8 ou 9, **caractérisé en ce que** la combinaison de la sonde (29) de mesure et de la sonde (30) de commutation fonctionne comme une unité de détection (28) dans un mode de fonctionnement de commutation ou dans un mode de fonctionnement de mesure.

11. Procédé selon l'une quelconque des revendications 8 à 10, **caractérisé en ce que** le basculement sur une autre constante de rappel est réalisé au moyen d'au moins un actionneur.

12. Procédé selon la revendication 11, **caractérisé en ce que** le basculement sur une autre constante de rappel s'effectue par blocage de tôles élastiques (42, 43, 44, 45).
